# EUROPEAN PATENT SPECIFICATION

(11) **EP 2 988 412 B1**
(45) Date of publication and mention of the grant of the patent: **18.09.2019**
(21) Application number: 15177889.1
(22) Date of filing: 22.07.2015
(51) Int. Cl.: H02P 9/02, H02P 3/04

(54) **SYSTEM AND METHOD FOR IMPROVING RESPONSE TIME OF A BRAKING UNIT**
SYSTEM UND VERFAHREN ZUR VERBESSERUNG DER ANSPRECHZEIT EINER BREMSEINHEIT
SYSTÈME ET PROCÉDÉ D'AMÉLIORATION DE DURÉE DE RÉPONSE D'UNE UNITÉ DE FREINAGE

(30) Priority: 24.07.2014 US 201414339552
(43) Date of publication of application: 24.02.2016
(73) Proprietor: AI ALPINE US BIDCO INC., Wilmington, Delaware 19801 (US)
(72) Inventor: SCHROEDER, Stafan, Niskayuna, NY 12309 (US); PANOSYAN, Ara, Niskayuna, NY 12309 (US); BOELD, Christopher, 85748 Munchen (DE); SCHAUMBERGER, Herbert, 6200 Tirol (AT); DONG, Xiaoting, 85748 Munchen (DE); LIEBSCHER, Uwe, 6200 Tirol (AT)
(74) Representative: Torggler & Hofinger Patentanwälte

(56) References cited:
- EP-A2- 2 680 433
- WO-A1-2014/013606
- JP-A- S60 167 602
- US-A1- 2015 217 660

## Description

### BACKGROUND

The disclosure relates generally to a power generation system and more specifically to improved response time of a braking unit in a power generation system.

Typically, when a fault in a utility system occurs, voltage in the utility system may suddenly decrease by a certain amount. This sudden decrease of the voltage may result in a sudden reduction of an electrical power output of a generator. As a consequence, there may be unbalance between the electrical power output of the generator and mechanical power input from an engine. This in turn causes acceleration of the generator, which may lead to loss of synchronism between the generator and an electrical grid. Also, stability of the electric grid may be jeopardized if the generator is disconnected. It is therefore desirable for the generators to remain synchronized to the grid, to ride through low voltage conditions, and to be able to feed electric power into the grid immediately after the fault is cleared.

Various techniques may be employed to overcome the issue of rapid acceleration in the generator during fault conditions. One such technique is to employ a braking unit in a power generation system to control speed of a rotor in the generator. In one example, the braking unit includes one or more coils that are disposed proximate to the rotor, and, when a voltage is applied to these coils, electromagnetic braking force is induced on the rotor such that the speed of the rotor is controlled accordingly. Due to the inductive nature of the coils, the rate of change in the electrical current in the coils is limited by the applied voltage and may require a longer than desired braking response time. To improve the response time, a higher voltage power source may be coupled to the coils. However, such power source would increase the cost and size of the braking unit and may be impractical. EP2680433 discloses an electromagnetic braking system of a power generation system including an electrically conductive disc coupled to a rotatable shaft operatively coupled between a prime mover and a generator; a controller for receiving a status signal from the power generation system and for generating a control signal based on the status signal; and an inducting unit for applying an electromagnetic braking force on the electrically conductive disc when commanded by the control signal to regulate a rotational speed of the rotatable shaft.

Hence, there is a need for an improved system and method for providing effective and inexpensive electromagnetic brakes on the rotor. Also, there is a need to provide a braking unit having a fast response time.

### BRIEF DESCRIPTION

In accordance with one embodiment described herein, a braking system includes a converter, a capacitor coupled to an output of the converter, a bridge coupled in parallel to the capacitor, at least one inductor coupled to the bridge, an electrically conductive disc disposed proximate to the at least one inductor, and a switching unit controller for commanding the converter to convert a level of voltage supplied therefrom from a first voltage level to a second voltage level and thereby increase energy stored in the capacitor, and, upon receiving a brake command, commanding the bridge to ramp-up electrical current in the at least one inductor so as to induce an electromagnetic force on the electrically conductive disc.

In accordance with a further aspect of the present disclosure, a method includes commanding a converter to increase a level of voltage supplied therefrom from a first voltage level to a second voltage level and thereby increase energy stored in a capacitor coupled in parallel between the converter and a bridge. The method further includes, upon receiving a brake command, causing the bridge to ramp-up electrical current in at least one inductor so as to induce an electromagnetic force on an electrically conductive disc.

In accordance with another aspect of the present disclosure, a power generation system includes an electrically conductive disc coupled to a rotatable shaft, at least one inductor disposed proximate to the electrically conductive disc, a power source, and a switching unit coupled between the power source and the at least one inductor. The switching unit comprises a converter, a capacitor coupled to an output of the converter, a bridge coupled in parallel to the capacitor, and a switching unit controller for commanding the converter to convert a level of voltage supplied therefrom from a first voltage level to a second voltage level and thereby increase energy stored in the capacitor, and, upon receiving a brake command, commanding the bridge to ramp-up electrical current in the at least one inductor so as to induce an electromagnetic force on the electrically conductive disc.

### DRAWINGS

These and other features, aspects, and advantages of the present invention will become better understood when the following detailed description is read with reference to the accompanying drawings in which like characters represent like parts throughout the drawings, wherein:
FIG. 1 is a diagrammatical representation of a power generation system utilizing a braking unit, in accordance with aspects of the present disclosure.
FIG. 2 is a block diagram of the braking unit, in accordance with aspects of the present disclosure;
FIG. 3 is a circuit diagram of the braking unit, in accordance with aspects of the present disclosure;
FIG. 4 illustrates signal waveforms of voltage and current signals in the braking unit, in accordance with aspects of the present disclosure; and
FIG. 5 is a flow chart illustrating a method for improving response time of the braking unit to induce an electromagnetic force, in accordance with aspects of the present disclosure.

### DETAILED DESCRIPTION

As will be described in detail hereinafter, various embodiments of exemplary systems and methods for improving a response time of a braking unit in a power generation system are presented. By employing the methods and the various embodiments of the system described hereinafter, speed of a rotatable shaft may be controlled within a desired time period, which in turn improves LVRT (low voltage ride through) or FRT (fault ride through) capabilities in the power generation system.

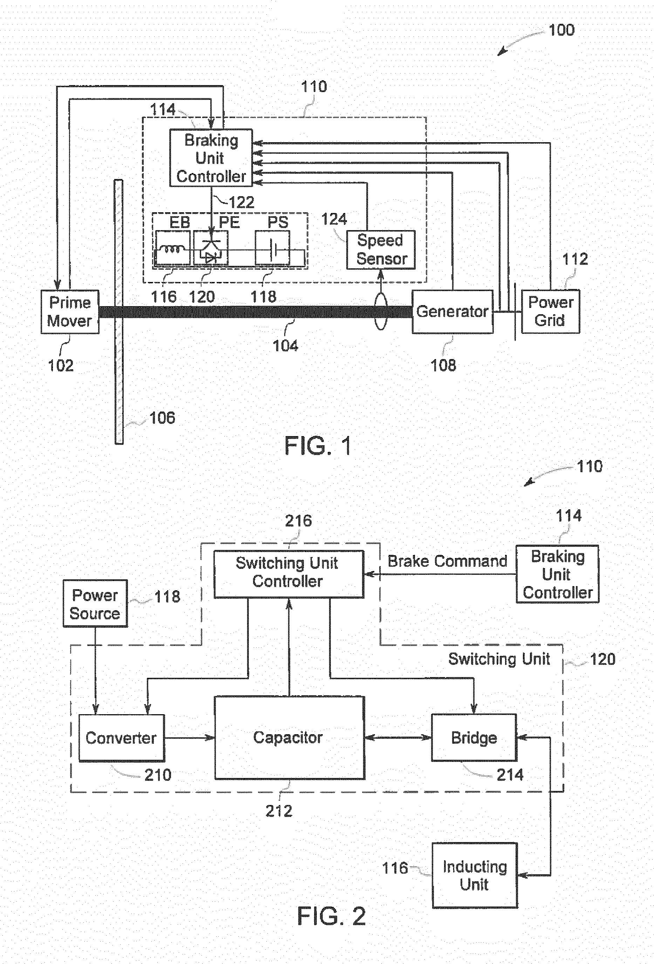

Referring to FIG. 1, a power generation system 100 having a braking unit, in accordance with aspects of the present disclosure, is depicted. The power generation system is typically used to convert mechanical power into electrical power. For example, in a wind system the kinetic energy of wind passing across a wind turbine is converted into mechanical power. As another example, mechanical power may be generated from a gas engine. This mechanical power is in turn used to generate electrical power. The power generation system includes a prime mover 102, a rotatable shaft 104, an electrically conductive disc 106, a generator 108, and a braking unit 110.

In one configuration, the prime mover 102 is mechanically coupled to the power generator 108 through the rotatable shaft 104. The rotatable shaft 104 is typically used to convey mechanical power from the prime mover 102 to the power generator 108. For example, the mechanical power produced at the prime mover 102 may be used to rotate the rotatable shaft 104 at a predetermined speed. This rotation of the rotatable shaft 104 in turn rotates a rotor (not shown) of the generator 108 to generate electrical power. Further, the generated electrical power at the generator 108 may be transferred to a power grid 112.

In the embodiment of FIG. 1, the electrically conductive disc 106 is rigidly coupled to the rotatable shaft 104 to control the rotational speed of the rotatable shaft 104. Particularly, when a fault (such as a voltage fall or drop) occurs in the system, the braking unit 110 may receive one or more command signals from the power generation system 100. In one example, the one or more command signals may include or result from one or more status signals received from the power generation system 100. The status signals may be representative of a rotational speed of the rotatable shaft 104, a voltage in the power grid 112, a current at the power generator 108, a mechanical power produced by a prime mover 102, a rotor angle of the power generator 108, an electrical power produced by the power generator 108 or combinations thereof. In one embodiment, the rotational speed of the rotatable shaft 104 may be determined by a speed sensor 124 that is operatively coupled to the rotatable shaft 104.

In response to receiving the command signals, the braking unit 110 induces an electromagnetic force on the electrically conductive disc 106, which in turn regulates or controls the rotational speed of the rotatable shaft 104. In one example, the speed of the rotatable shaft 104 may be regulated or controlled below a threshold speed value. Moreover, by regulating the rotational speed of the rotatable shaft 104, the braking unit 110 may maintain synchronism between the generator 108 and the power grid 112.

As further shown in FIG. 1, the braking unit 110 includes a braking unit controller 114, an inducting unit 116, a power source 118, and a switching unit 120. The inducting unit 116 is coupled to the power source 118 via the switching unit 120 and comprises one or more inductors that are disposed proximate to the electrically conductive disc 106. Further, the braking unit controller 114 is coupled to the switching unit 120 and may send a brake command 122 based on one or more command signals received from the power generation system 100. The brake command 122 may be sent to the switching unit 120 to control the voltage applied to the inducting unit 116.

Referring to FIG. 2, a more detailed block diagram of the braking unit 110, in accordance with aspects of the present disclosure, is depicted showing the switching unit 120 as comprising a converter 210, a capacitor 212, a bridge 214 and a switching unit controller 216.

The power source 118 may comprise a low power source, for example, such as a battery having a voltage at a first voltage level. In one example, the first voltage level may be in a range from about 5V to about 50V.

The inducting unit 116 is disposed proximate to an electrically conductive disc 106 (FIG. 1) that is rigidly coupled to a rotatable shaft 104 (FIG. 1) of a power generator 108 (FIG. 1). Particularly, the inducting unit 116 comprises one or more inductors that are disposed proximate to the electrically conductive disc 106 to induce an electromagnetic force on the electrically conductive disc 106. In one example, the one or more inductors may represent electrical coils that are disposed near either side or both sides of the electrically conductive disc 106.

The switching unit 120 is operatively coupled between the power source 118 and the inducting unit 116 and is used to control the voltage applied to the inducting unit 116 based on a brake command 122 received from the braking unit controller 114. In the embodiment of FIG. 2, the switching unit 120 comprises the converter 210, the capacitor 212, the bridge 214 and the switching unit controller 216. Although the switching unit controller 116 is shown as being included within the switching unit 120 for purposes of example, the switching unit controller 216 may alternatively be integrated within the braking unit controller 114 in some embodiments. The converter 210 is coupled between the power source 118 and the capacitor 212. The converter 210 is used to convert the voltage provided by the power source 118 and thereby increase the energy stored in the capacitor 212. Further, the bridge 214 is coupled between the capacitor 212 and the inducting unit 116. The bridge 214 is used to provide the energy stored in the capacitor 212 to the one of more inductors when the brake command is received by the switching unit controller 216. The bridge 214 may further be used to provide energy from the inducting unit 116 to the capacitor 212 when the brake command ceases. As used herein "brake command ceases" is intended to cover either (a) the stopping of transmission of the brake command (in the circumstance wherein the switching unit controller continuously receives the command during braking until braking is completed) or (b) a separate command to stop braking (in the circumstance wherein the switching unit controller receives a discrete braking command at one time instance and a separate command to stop braking at a later time instance). Until the brake command ceases, the brake command is referenced as "remaining active."

During operation, the power source 118 is active, and the converter 210 converts the voltage provided by the power source 118 from the first voltage level to the second voltage level which in one example is in the range from about 200V to about 600V for charging the capacitor 212. In a more specific example, the voltage in the capacitor 212 is increased to about 400V.

At a later point in time, if the switching unit controller 216 receives the brake command from the braking unit controller 114, the switching unit controller 216 then commands the bridge 214 to provide the voltage in the capacitor 212 to the inducting unit 116 so as to induce the electromagnetic force on the electrically conductive disc 106 (FIG. 1). Particularly, the second voltage in the capacitor 212 is used to provide a fast ramp-up of electrical current in the inducting unit 116. In one example, the electrical current may be ramped up in the inducting unit 116 within a first time period ranging from about 5 ms to about 50 ms. This fast ramp-up of electrical current in the inducting unit 116 may reduce time to induce the electromagnetic force on the electrically conductive disc 106, and thus improve the response time of the braking unit 110 to induce the electromagnetic force on the electrically conductive disc 106.

When braking, as the electrical current ramps up in the inducting unit 116, the energy stored in the capacitor 212 is reduced. In one embodiment, if the switching unit controller 216 determines that the energy stored in the capacitor 212 has fallen below a threshold value, the switching unit controller 216 commands the converter 210 to again increase the level of voltage supplied by the power source 118 above the first voltage level. In a more specific embodiment, the increase is not to the level of the second voltage level but is to a third voltage level that is less than the second voltage level. In one example, the third voltage level may be in a range from about 50V to about 100V. In this embodiment, the converter 210 may continuously charge the capacitor 212 at the third voltage level while further braking is needed. Thus, the capacitor 212 may be continuously charged at the third voltage level so that the electrical current may flow continuously in the inducting unit 116 to compensate the electrical losses in the one or more inductors of the inducting unit 116 and maintain the current in one or more inductors at a steady state.

Furthermore, at some point after the speed of the rotatable shaft 106 is controlled, the brake command will cease. The switching unit controller 216 may then command the bridge 214 to stop providing energy from the capacitor 212 to the inducting unit 116. Further, in an optional embodiment, the switching unit controller 216 may command the inducting unit 116 to provide any remaining energy to the capacitor 212 and thereby recharge the capacitor 212 to a fourth voltage level. Due to electrical losses in the one or more inductors of the inducting unit 116, the fourth voltage level may be less than the second voltage level. In this embodiment, to compensate these electrical losses, the switching unit controller 216 may then command the converter 210 to convert the voltage supplied by the power source 118 from the first voltage level back up to the second voltage level such that the capacitor 212 is further charged to increase the voltage in the capacitor 212 from the fourth voltage level to the second voltage level. This cycle may be repeated again if the switching unit controller 216 once again receives the brake command from the braking unit controller 114.

Thus, by employing a sufficiently large capacitor 212 in the switching unit 120, energy associated with a high enough voltage for fast braking may be stored and may be provided to the inductors to build-up fast ramp-up of electrical current in the one or more inductors of inducting unit 116. This in turn improves the response time of the braking unit 110 to induce the electromagnetic force on the electrically conductive disc 106.

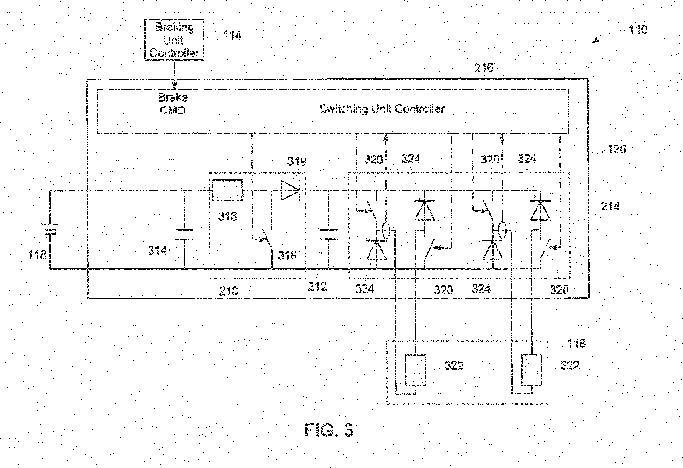

Referring to FIG. 3 a circuit diagram (schematic view) of a braking unit 110, in accordance with aspects of the present disclosure, is depicted. For ease of understanding, the braking unit 110 is described with reference to the components of FIGs. 1 and 2. The braking unit 110 includes the braking unit controller 114, the inducting unit 116, the power source 118, and the switching unit 120.

In the embodiment of FIG. 3, a capacitor 314 is coupled in parallel to the power source 118 to filter AC components in the current generated by the converter 210. Further, in an example embodiment, the converter 210 includes an inductor 316, a switch 318, and a diode 319. In one embodiment, the switch 318 comprises a MOSFET and/or an IGBT, for example. The switch 318 is coupled in parallel to the power source 118 and is controlled to increase a level of voltage provided from the power source 118 via the inductor 316. For example, the switching unit controller 216 may toggle the switch 318 to adjust a duty cycle of the voltage so as to increase the level of voltage provided by the power source 118. Further, the diode 319 is used to allow the energy associated with the increased level of voltage provided by the power source 118 towards the capacitor 212.

The capacitor 212 is coupled in parallel to the switch 318 through the diode 319. As discussed with respect to FIG. 2, the capacitor 212 is used to store a high voltage before receiving a brake command and to provide the stored high voltage to the inducting unit 116 when the brake command is received. Also, the capacitor 212 may be partially recharged with the energy in the inducting unit 116 when the brake command ceases. In one embodiment, the capacitor 212 comprises a capacitor bank for providing enough energy storage.

The bridge 214 is in turn coupled in parallel to the capacitor 212 in the embodiment of FIG. 3. In one example, the bridge 214 may comprise an H-bridge circuit having two branches coupled in parallel to the capacitor 212. Each branch comprises a pair of switches 320 and a pair of diodes 324 coupled to a respective inductor 322 in the inducting unit 116. Switches 320 may comprise MOSFETs in one embodiment. Each pair of switches 320 may be turned ON when the switching unit controller 216 receives the brake command in order to provide the voltage across the capacitor 212 to the inductors 322 in the inducting unit 116. In one example, the switches 320 are turned ON to move the switches 320 from a non-conducting state to a conducting state so that the electrical current flows from the capacitor to the inductors 322 via the switches 320.

Similarly, each pair of switches 320 may be turned OFF when the braking ends. Particularly, when the braking ends, the switches 320 may be turned OFF to move the switches 320 back to the non-conducting state so that the electrical current does not flow through the switches 320. However, energy that is accumulated in the inductors 322 may flow in an opposite direction through the diodes 324 to recharge the capacitor 212 to the fourth voltage level. Moreover, the energy provided by the inductors 322 may not be at the second voltage level due to electrical losses in the inductors 322. Thus, the capacitor 212 may only be charged to the fourth voltage level which is less than the second voltage level.

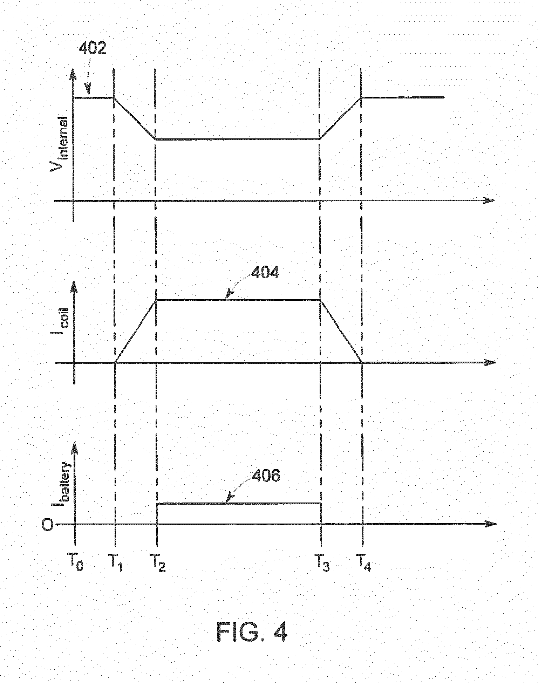

FIG. 4 illustrates example signal waveforms of voltage and current signals in a braking unit, in accordance with aspects of the present disclosure. For ease of understanding, the signal waveforms are described with reference to the components of FIG. 3, and FIG. 4 is an example wherein the power source 118 comprises a battery. The signal waveforms include a capacitor voltage signal 402, a coil current signal 404, and a battery current signal 406. The capacitor voltage signal 402 represents voltage across the capacitor 212, the coil current signal 404 represents electrical current in the inductors 322, and the battery current signal 406 represents electrical current provided by the power source 118.

As depicted in FIG. 4, at time T₀, the capacitor voltage signal 402 is at maximum or peak level (meaning the capacitor 212 is fully charged to the second voltage level), and the coil current signal 404 and the battery current signal 406 are at zero levels. This is because no current is needed yet by the inducting unit, and, after the capacitor voltage reaches the second voltage level, the power source 118 need not continue supplying further electrical current until or unless the capacitor later becomes depleted.

Further, at time T₁, a brake command is received and the voltage across the capacitor 212 is provided to the inductors 322. Thus, the capacitor voltage signal 402 may start to ramp-down and the coil current signal 404 may start to ramp-up. When the capacitor 212 has very high voltage, such as, for example, about 400V, a change rate of the electrical current in the inductors 322 will also be very high. Therefore, the coil current signal 404 may ramp-up by time T₂. The time period between time T₁ and T₂ is referred to as a first time period. In one example, the first time period may be in a range from about 5 ms to about 50 ms.

Further, after time T₂, the coil current signal 404 may be operable at a steady state. However, electrical losses will be present in the inductors 322 such that some further current will be needed to maintain the coil current signal 404 at the steady state. In the embodiment of FIG. 4, after time T₂, the battery current signal 406 at a determined level may be continuously provided to the capacitor 212 so as to maintain the charge of the capacitor 212 at a third voltage level. In this embodiment, the electrical current from the capacitor 212 is continuously provided to the inductors 322 to compensate these electrical losses in the inductors 322.

Time T₃ represents time at which the brake command ceases. At this time, in the embodiment shown in FIG. 4, the energy in the inductors 322 is directed in the opposite direction to recharge the capacitor at the second voltage level. Thus, the capacitor voltage signal 402 may ramp-up, and the coil current signal 404 may ramp-down by time T₄. The time period between time T₃ and T₄ is referred to as a second time period. In one example, the second time period may be in a range from about 5 ms to about 50 ms. Also, at time T3, the power source 118 may cease to supply the battery current signal 406 as the capacitor 212 is recharged by the energy in the inductors 322. Thus, the battery current signal 406 from the power source 118 may drop to zero level at time T₃. This example presumes there is little inductor loss. In practice, the battery current signal may continue for some period of time to make up for any inductor losses and fully ramp back up capacitor voltage signal 402 as described with respect to FIG. 2.

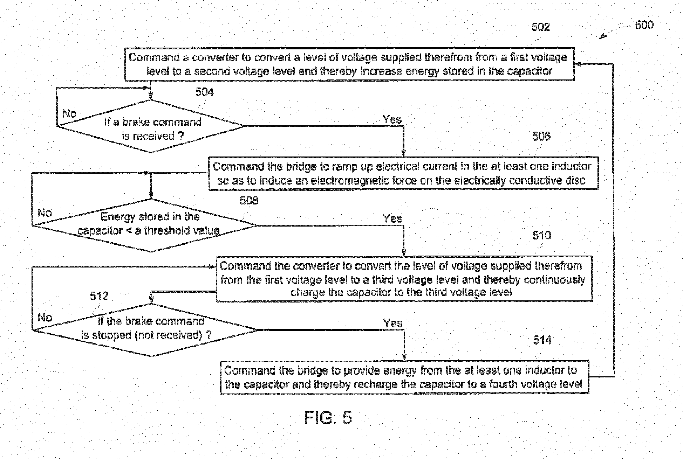

Referring to FIG. 5, a flow chart illustrating a method for improving response time of a braking unit to induce an electromagnetic force, in accordance with aspects of the present disclosure, is depicted. For ease of understanding, the method 500 is described with reference to the components of FIGs. 2 and 3. The method 500 begins with step 502, where a level of voltage supplied by the power source 118 is converted from a first voltage level to a second voltage level so as to increase energy stored in the capacitor 212.

Subsequently, at step 504, the switching unit controller 216 verifies whether a brake command is received from a braking unit controller 114. If the switching unit controller 216 receives the brake command, then the method 500 moves to step 506. At step 506, the switching unit controller 216 commands the bridge 214 to ramp-up electrical current in the at least one inductor 322 so as to induce an electromagnetic force on the electrically conductive disc 106. Particularly, the bridge 214 may provide the energy stored the capacitor 212 to the at least one inductor 322. Since the capacitor 212 is charged to the second voltage level, the electrical current in the at least one inductor 322 may ramp up within a first time period. In one example, the first time period may be in a range from about 5 ms to about 50 ms. It may be noted that the term "ramp up" means ramping up the electrical current up to a significant fraction of its final value.

At step 508, energy stored in the capacitor is verified. Particularly, the switching unit controller 216 may periodically or continually determine whether the energy in the capacitor 212 is below a threshold value. If the energy in the capacitor 212 is below the threshold value, the method moves to step 510.

At step 510, the switching unit controller 216 commands the converter 210 to convert the level of voltage supplied therefrom from the first voltage level to a third voltage level so that the capacitor 212 is continuously charged to the third voltage level. This charging is useful because there may be electrical losses in the inductors 322 when the electrical current flows through the inductors 322.

When the brake command ceases, that status is detected at step 512, and the method moves to step 514 where the switching unit controller 216 commands the bridge 214 to provide energy from the at least one inductor 322 to the capacitor 212 and thereby recharge the capacitor 212 to a fourth voltage level. Thereafter, the method moves to back to the step 502 where the capacitor may be fully charged in preparation for the next brake command.

The various embodiments of the system and the method may be used for improving response time of the braking unit aid in riding LVRT within a desired time period. Additionally, when a battery is used as the power source and low cost power electronics are used for the converter and bridge in combination with the capacitor, the cost and size of the system remain reasonable.

## Claims

1. A braking system (110), comprising at least one inductor (116); and an electrically conductive disc (106) disposed proximate to the at least one inductor (116), **characterized by** a converter (210);
a capacitor (212) coupled to an output of the converter (210);
a bridge (214) coupled in parallel to the capacitor (212); the inductor coupled (116) to the bridge (214); and a switching unit controller (216) configured to command the converter (210) to convert a level of voltage supplied therefrom from a first voltage level to a second voltage level and thereby increase energy stored in the capacitor (212), and, upon receiving a brake command, commanding the bridge (214) to ramp-up electrical current in the at least one inductor (116) so as to induce an electromagnetic force on the electrically conductive disc (106).

2. The braking system of claim 1, wherein the electrical current is ramped up in the at least one inductor (116) within 50 ms.

3. The braking system of claim 1 or 2, wherein the switching unit controller (216) is programmed for, after commanding the bridge (214) to ramp-up electrical current in the at least one inductor (116) and upon determining that the energy stored in the capacitor (212) is below a threshold value, commanding the converter (210) to increase the level of voltage supplied therefrom from the first voltage level to a third voltage level.

4. The braking system of claim 3, wherein the third voltage level is less than the second voltage level.

5. The braking system of claim 3 or 4, wherein the switching unit controller (216) is programmed for continuing to command the converter (210) to increase the level of voltage supplied therefrom from the first voltage level to the third voltage level until the brake command ceases.

6. The braking system of any preceding claim, wherein the switching unit controller (216) is further configured for commanding the bridge (214) to provide energy from the at least one inductor (116) to the capacitor (212) and thereby recharge the capacitor (212) to a fourth voltage level when the brake command ceases.

7. The braking system of claim 6, wherein the electrical current in the at least one inductor (116) is ramped down within 50 ms after initiation of recharging of the capacitor (212).

8. The braking system of claim 7, wherein the switching unit controller (216) is further configured for, after the capacitor (212) is recharged to the fourth voltage level, commanding the converter (210) to convert the level of voltage supplied therefrom from the first voltage level to the second voltage level.

9. The braking system of any preceding claim, wherein the first voltage level ranges from about 5V to about 50V.

10. The braking system of claim 9, wherein the second voltage level ranges from about 200V to about 600V.

11. A method comprising:
commanding a converter (210) to increase a level of voltage supplied therefrom from a first voltage level to a second voltage level and thereby increase energy stored in a capacitor (212) coupled in parallel between the converter (210) and a bridge (214); and
upon receiving a brake command, causing the bridge (214) to ramp-up electrical current in at least one inductor (116) so as to induce an electromagnetic force on an electrically conductive disc (106).

12. The method of claim 11, further comprising, while the brake command remains active:
upon determining that the energy stored in the capacitor (212) is below a threshold value,
commanding the converter (210) to convert the level of voltage supplied therefrom from the first voltage level to a third voltage level until the brake command ceases.

13. The method of claim 12, further comprising, upon the brake command ceasing:
commanding the bridge (214) to provide energy from the at least one inductor (116) to the capacitor (212) and thereby recharge the capacitor (212) to a fourth voltage level.

14. The method of claim 13, further comprising, after the capacitor (212) is recharged to the fourth voltage level, commanding the converter (210) to convert the level of voltage supplied therefrom from the first voltage level to the second voltage level and thereby increase the energy stored in the capacitor (212).

15. A power generation system comprising a power source and the braking system of any of claims 1 to 10.

## Patentansprüche

1. Bremssystem (110), das mindestens eine Induktionsspule (116) und eine elektrisch leitfähige Scheibe (106) umfasst, die nahe der mindestens einen Induktionsspule (116) angeordnet ist, **gekennzeichnet durch**
einen Konverter (210);
einen Kondensator (212), der gekoppelt ist mit einem Ausgang des Konverters (210);
eine Brücke (214), die mit dem Kondensator (212) parallel geschaltet ist;
wobei die Induktionsspule (116) mit der Brücke (214) gekoppelt ist; und
einen Schalteinheit-Controller (216), der dafür konfiguriert ist, den Konverter (210) anzuweisen, einen von ihm ausgegebenen Spannungspegel von einem ersten Spannungspegel zu einem zweiten Spannungspegel zu konvertieren und dadurch die in dem Kondensator (212) gespeicherte Energie zu erhöhen, und bei Empfang eines Bremsbefehls die Brücke (214) anzuweisen, den elektrischen Strom in der mindestens einen Induktionsspule (116) so anzuheben, dass eine elektromagnetische Kraft an der elektrisch leitfähigen Scheibe (106) induziert wird.

2. Bremssystem nach Anspruch 1, wobei der elektrische Strom in der mindestens einen Induktionsspule (116) innerhalb von 50 ms angehoben wird.

3. Bremssystem nach Anspruch 1 oder 2, wobei der Schalteinheit-Controller (216) dafür programmiert ist, nachdem die Brücke (214) angewiesen wurde, den elektrischen Strom in der mindestens einen Induktionsspule (116) anzuheben, und nachdem bestimmt wurde, dass die in dem Kondensator (212) gespeicherte Energie unter einem Schwellenwert liegt, den Konverter (210) anzuweisen, den von ihm ausgegebenen Spannungspegel von dem ersten Spannungspegel zu einem dritten Spannungspegel anzuheben.

4. Bremssystem nach Anspruch 3, wobei der dritte Spannungspegel niedriger ist als der zweite Spannungspegel.

5. Bremssystem nach Anspruch 3 oder 4, wobei der Schalteinheit-Controller (216) dafür programmiert ist, den Konverter (210) fortgesetzt anzuweisen, den von ihm ausgegebenen Spannungspegel von dem ersten Spannungspegel zu dem dritten Spannungspegel zu erhöhen, bis der Bremsbefehl endet.

6. Bremssystem nach einem der vorangehenden Ansprüche, wobei der Schalteinheit-Controller (216) des Weiteren dafür konfiguriert ist, die Brücke (214) anzuweisen, Energie von der mindestens einen Induktionsspule (116) in den Kondensator (212) einzuspeisen und dadurch den Kondensator (212) auf einen vierten Spannungspegel nachzuladen, wenn der Bremsbefehl endet.

7. Bremssystem nach Anspruch 6, wobei der elektrische Strom in der mindestens einen Induktionsspule (116) innerhalb von 50 ms nach der Initiierung des Nachladens des Kondensators (212) abgesenkt wird.

8. Bremssystem nach Anspruch 7, wobei der Schalteinheit-Controller (216) des Weiteren dafür konfiguriert ist, nachdem der Kondensator (212) auf den vierten Spannungspegel nachgeladen wurde, den Konverter (210) anzuweisen, den von ihm ausgegebenen Spannungspegel von dem ersten Spannungspegel zu dem zweiten Spannungspegel zu konvertieren.

9. Bremssystem nach einem der vorangehenden Ansprüche, wobei der erste Spannungspegel im Bereich von etwa 5 V bis etwa 50 V liegt.

10. Bremssystem nach Anspruch 9, wobei der zweite Spannungspegel im Bereich von etwa 200 V bis etwa 600 V liegt.

11. Verfahren, das Folgendes umfasst:
Anweisen eines Konverters (210), einen von ihm ausgegebenen Spannungspegel von einem ersten Spannungspegel zu einem zweiten Spannungspegel zu erhöhen und dadurch die Energie zu erhöhen, die in einem Kondensator (212) gespeichert ist, der zwischen dem Konverter (210) und einer Brücke (214) parallel geschaltet ist; und
nach dem Empfang eines Bremsbefehls, Veranlassen der Brücke (214), den elektrischen Strom in mindestens einer Induktionsspule (116) so anzuheben, dass eine elektromagnetische Kraft an der elektrisch leitfähigen Scheibe (106) induziert wird.

12. Verfahren nach Anspruch 11, das des Weiteren umfasst, während der Bremsbefehl aktiv bleibt:
nach dem Bestimmen, dass die in dem Kondensator (212) gespeicherte Energie unter einem Schwellenwert liegt,
Anweisen des Konverters (210), den von ihm ausgegebenen Spannungspegel von dem ersten Spannungspegel zu einem dritten Spannungspegel zu konvertieren, bis der Bremsbefehl endet.

13. Verfahren nach Anspruch 12, das des Weiteren umfasst, nachdem der Bremsbefehl beendet wurde:
Anweisen der Brücke (214), Energie von der mindestens einen Induktionsspule (116) in den Kondensator (212) einzuspeisen und dadurch den Kondensator (212) auf einen vierten Spannungspegel nachzuladen.

14. Verfahren nach Anspruch 13, das des Weiteren umfasst, nachdem der Kondensator (212) auf den vierten Spannungspegel nachgeladen wurde, den Konverter (210) anzuweisen, den von ihm ausgegebenen Spannungspegel von dem ersten Spannungspegel zu dem zweiten Spannungspegel zu konvertieren und dadurch die in dem Kondensator (212) gespeicherte Energie zu erhöhen.

15. Energieerzeugungssystem, das eine Stromquelle und das Bremssystem nach einem der Ansprüche 1 bis 10 umfasst.

## Revendications

1. Système de freinage (110), comprenant: au moins une bobine d'induction (116) ; et un disque électriquement conducteur (106) disposé à proximité de ladite au moins une bobine d'induction (116), **caractérisé par** :
un convertisseur (210) ;
un condensateur (212) couplé à une sortie du convertisseur (210) ;
un pont (214) couplé en parallèle au condensateur (212) ;
la bobine d'induction (116) étant couplée au pont (214) ; et
un contrôleur d'unité de commutation (216) configuré de manière à commander au convertisseur (210) de convertir un niveau de tension fourni par celui-ci, d'un premier niveau de tension en un deuxième niveau de tension, et par conséquent d'augmenter l'énergie stockée dans le condensateur (212), et, suite à la réception d'une commande de freinage, à commander au pont (214) d'augmenter progressivement un courant électrique dans ladite au moins une bobine d'induction (116) de manière à induire une force électromagnétique sur le disque électriquement conducteur (106).

2. Système de freinage selon la revendication 1, dans lequel le courant électrique est augmenté progressivement dans ladite au moins une bobine d'induction (116) en 50 ms.

3. Système de freinage selon la revendication 1 ou 2, dans lequel le contrôleur d'unité de commutation (216) est programmé de manière à, après avoir commandé au pont (214) d'augmenter progressivement le courant électrique dans ladite au moins une bobine d'induction (116), et après avoir déterminé que l'énergie stockée dans le condensateur (212) est inférieure à une valeur de seuil, commander au convertisseur (210) d'augmenter le niveau de tension fourni à partir de celui-ci, du premier niveau de tension à un troisième niveau de tension.

4. Système de freinage selon la revendication 3, dans lequel le troisième niveau de tension est inférieur au deuxième niveau de tension.

5. Système de freinage selon la revendication 3 ou 4, dans lequel le contrôleur d'unité de commutation (216) est programmé de manière à continuer de commander au convertisseur (210) d'augmenter le niveau de tension fourni par celui-ci, du premier niveau de tension au troisième niveau de tension, jusqu'à ce que cesse la commande de freinage.

6. Système de freinage selon l'une quelconque des revendications précédentes, dans lequel le contrôleur d'unité de commutation (216) est en outre configuré de manière à commander au pont (214) de fournir de l'énergie, de ladite au moins une bobine d'induction (116) au condensateur (212), et de recharger par conséquent le condensateur (212) à un quatrième niveau de tension lorsque cesse la commande de freinage.

7. Système de freinage selon la revendication 6, dans lequel le courant électrique, dans ladite au moins une bobine d'induction (116), est réduit progressivement dans les 50 ms qui suivent l'initiation de la recharge du condensateur (212).

8. Système de freinage selon la revendication 7, dans lequel le contrôleur d'unité de commutation (216) est en outre configuré de manière à, après que le condensateur (212) a été rechargé au quatrième niveau de tension, commander au convertisseur (210) de convertir le niveau de tension fourni par celui-ci, du premier niveau de tension au deuxième niveau de tension.

9. Système de freinage selon l'une quelconque des revendications précédentes, dans lequel le premier niveau de tension est compris entre environ 5 V et environ 50 V.

10. Système de freinage selon la revendication 9, dans lequel le deuxième niveau de tension est compris entre environ 200 V et environ 600 V.

11. Procédé comprenant les étapes ci-dessous consistant à :
commander à un convertisseur (210) d'augmenter un niveau de tension fourni par celui-ci, d'un premier niveau de tension à un deuxième niveau de tension, et par conséquent d'augmenter l'énergie stockée dans un condensateur (212) couplé en parallèle entre le convertisseur (210) et un pont (214) ; et
suite à la réception d'une commande de freinage, amener le pont (214) à augmenter progressivement un courant électrique dans au moins une bobine d'induction (116) de manière à induire une force électromagnétique sur un disque électriquement conducteur (106).

12. Procédé selon la revendication 11, comprenant en outre, tandis que la commande de freinage reste active, l'étape ci-dessous consistant à :
après avoir déterminé que l'énergie stockée dans le condensateur (212) est inférieure à une valeur de seuil,
commander au convertisseur (210) de convertir le niveau de tension fourni à partir de celui-ci, du premier niveau de tension en un troisième niveau de tension, jusqu'à ce que cesse la commande de freinage.

13. Procédé selon la revendication 12, comprenant en outre l'étape ci-dessous consistant à, dès que la commande de freinage cesse :
commander au pont (214) de fournir de l'énergie, de ladite au moins une bobine d'induction (116) au condensateur (212), et de recharger par conséquent le condensateur (212) à un quatrième niveau de tension.

14. Procédé selon la revendication 13, comprenant en outre l'étape consistant à, dès lors que le condensateur (212) a été rechargé au quatrième niveau de tension, commander au convertisseur (210) de convertir le niveau de tension fourni à partir de celui-ci, du premier niveau de tension en le deuxième niveau de tension, et d'augmenter par conséquent l'énergie stockée dans le condensateur (212).

15. Système de production d'énergie comprenant une source d'énergie et le système de freinage selon l'une quelconque des revendications 1 à 10.
